# EUROPEAN PATENT APPLICATION

(11) **EP 4 641 903 A1**
(43) Date of publication of application: **29.10.2025**
(21) Application number: 25170393.0
(22) Date of filing: 14.04.2025
(51) Int. Cl.: H02M 1/44, H02M 7/00

(54) **EMC FILTER ASSEMBLY FOR A POWER CONVERTER AND POWER CONVERTER**

(30) Priority: 25.04.2024 FR 2404335
(71) Applicant: Valeo eAutomotive Germany GmbH, 91056 Erlangen (DE)
(72) Inventor: EICHNER, Markus, 91056 Erlangen (DE); PFEIFFER, Kay, 91056 Erlangen (DE); HUEBNER, Maximilian, 91056 Erlangen (DE); FEILER, Maik, 91056 Erlangen (DE)
(74) Representative: Valeo Powertrain Systems

(57) **Abstract**

EMC filter assembly (1, 23, 27) for a power converter, comprising a first electrical connection which is adapted to connect a first output terminal of a battery with a first electrical supply terminal of a power converter, at least one first inductivity (7), which is part of the first electrical connection, at least one first class Y capacitor (11, 12, 34, 35), connected between the first electrical connection and ground, a second electrical connection which is adapted to connect a second output terminal of a battery with a second electrical supply terminal of the power converter, at least one second inductivity (10), which is part of the second electrical connection, at least one second class Y capacitor (13, 14, 36, 37), connected between the second electrical connection and ground, at least one class X capacitor (15, 33), connected between the first electrical connection and the second electrical connection, wherein the at least first inductivity (7), the at least one first class Y capacitor (11, 12, 34, 35), the at least second inductivity (10), the at least one second class Y capacitor (13, 14, 36, 37) and the at least one class X capacitor (15, 33) are received and preassembled in a housing (17, 24, 30).

## Description

The invention relates to an EMC filter assembly for a power converter, comprising: a first electrical connection which is adapted to connect a first output terminal of a battery with a first electrical supply terminal of a power converter, at least one first inductivity, which is part of the first electrical connection, at least one first class Y capacitor, connected between the first electrical connection and ground, a second electrical connection which is adapted to connect a second output terminal of a battery with a second electrical supply terminal of the power converter, at least one second inductivity, which is part of the second electrical connection, at least one second class Y capacitor, connected between the second electrical connection and ground, and at least one class X capacitor, connected between the first electrical connection and the second electrical connection.

Modern electrically powered vehicles comprise a power converter, in particular an inverter, which is connected to a battery and generates an alternating current which is used to drive one or more electric motors. There is a trend to arrange the inverter near the electric motor. However, this creates harsh environmental conditions for components of the inverter. It is therefore necessary to employ an EMC filter assembly for the power converter. A conventional EMC filter assembly typically comprises a first electrical connection, a first inductivity, at least one first class Y capacitor, which is connected between line and ground ("line to ground"), a second electrical connection, at least one second inductivity, at least one second class Y capacitor and at least one class X capacitor, which is connected between the first and the second electrical connection ("line to line").

Conventionally, for different inverters several specific EMC filter assemblies are used. However, manufacture is difficult in view of the large variety of parts, when, as an example, different housings with different EMC filter assemblies are used.

Furthermore, some EMC filter assemblies have shown to be susceptible to vibration.

Accordingly, the object of the present invention is to provide an EMC filter assembly which can be manufactured easily and which is mechanically robust.

This object is achieved by an EMC filter assembly with the features of claim 1.

In the inventive EMC filter assembly, the at least first inductivity, the at least one first class Y capacitor, the at least second inductivity, the at least one second class Y capacitor and the at least one class X capacitor are received and preassembled in a housing.

In particular, the at least first inductivity, the at least one first class Y capacitor, the at least second inductivity, the at least one second class Y capacitor and the at least one class X capacitor are arranged in the same housing.

For example, the housing is a single part such as a molded part.

The invention is based on the idea that all parts of the EMC filter assembly can be preassembled, so that the EMC filter assembly is a premanufactured component, which can be easily be mounted in a power converter, in particular in an inverter, as a single part.

Tests have shown that the inventive EMC filter assembly does not suffer from vibration problems, instead it is very robust against vibration. Pre-assembly of the different parts of the EMC filter assembly has the further advantage that the individual EMC filter components can have larger tolerances without this leading to problems.

In the inventive EMC filter assembly, the first and/or the second inductivity is formed as a magnetic core or a nanocrystalline core or a ferrite. The specific kind of the electronic component which is used as inductivity is chosen according to the requirement of the respective application, for which the EMC filter assembly is intended.

In the invention it is particularly preferred, that the at least first inductivity, the at least one first class Y capacitor, the at least second inductivity, the at least one second class Y capacitor and the at least one class X capacitor are glued and/or potted with resin in the housing. Potting the components with resin in the housing ensures that all EMC filter components are embedded, so that they are mechanically protected from damage. If they are surrounded by and embedded in resin, vibrations are automatically suppressed.

In the invention it can also be envisaged that the first electrical connection and/or the second electrical connection extend through an opening of a magnetic core, preferably a nanocrystalline core. This assembly guarantees that the desired EMC filter effect is present.

Preferably, the first electrical connection and/or the second electrical connection are formed as bus bars, preferably with a rectangular cross-section. Bus bars are used to connect an output terminal of a battery with an electric supply terminal. Bus bars can be bent, if necessary, in order to adapt them to different installation environments.

In the inventive EMC filter assembly, the housing is preferably made from an electrically insulating material, preferably a plastic material. When a plastic material is used for the housing, it is automatically insulates the contained electric components, so that unwanted or dangerous electrical contacts and flashovers are avoided.

In order to facilitate mounting of the housing on a substrate, it is preferred that the housing comprises at least one through hole and/or at least one lug with a through hole for fastening the housing. The housing can then be mounted with screws or rivets, which are inserted through the through holes and/or lugs.

According to a preferred embodiment of the invention, the first electrical connection comprises at least two first inductivities and/or the second electrical connection comprises at least two second inductivities, wherein the two first or second inductivities are each connected in series. When two inductivities are used, which are connected in series, the respective inductances add up. Accordingly, two small inductivities can be used instead of one large inductivity, which can be an advantage with regard to the need for installation space.

A series connection of the at least two first or second inductivities implies that these inductivities are directly connected electrically to each other, with no other component or other electrical path branching out between them. This also implies that they are traversed by the same current. Additionally, the voltage drop across both of them equals the sum of the voltage drops across each individual inductivity.

Preferably, the at least two inductivities are physically adjacent to each other. This means that no other functional component is disposed between them. This proximity of similar elements allows a compact assembly inside the housing.

The invention can provide that the at least one first inductivity, the at least one first class Y capacitor, the at least one second inductivity, the at least one second class Y capacitor and the at least one class X capacitor are arranged on a printed circuit board (PCB) or on a lead frame. All electronic components of the EMC filter assembly can be preassembled on a PCB or on a lead frame as an alternative. Subsequently the preassembled PCB or lead frame is installed in a housing. Preassembling the electronic components contributes to simplification and acceleration of the manufacturing and assembly process.

For example, the at least one first class Y capacitor, the at least one second class Y capacitor and the at least one class X capacitor are connected electrically to the first and the second electrical connections respectively through the PCB. The direct assembly of the components on a PCB allows for more stability during operation, enhancing the robustness against vibration.

Preferably, the at least one first class Y capacitor, the at least one second class Y capacitor and the at least one class X capacitor are directly connected to the printed circuit board, both physically and electrically.

In addition, according to a preferred embodiment, the first and second electrical connections comprise means to connect electrically and mechanically to the PCB. The above mentioned capacitors are then connected to the electrical connections through the PCB.

For example, the class X capacitor is arranged with a length direction perpendicular to the length direction of at least one class Y capacitor. The length of the capacitor correspond to a line comprising both connection terminals of the capacitor.

For example, all the class Y capacitors are arranged with the same length direction.

For example, the class X capacitor is arranged between the class Y capacitors.

For example, all capacitors are arranged on the same side of the first and second inductivity.

For example, all capacitors are arranged in an adjacent manner.

For example, the EMC filter assembly comprises only one class X capacitor and several class Y capacitors, for example 4 class Y capacitors.

In addition, the invention refers to a power converter, in particular an inverter, for an electric motor.

The inventive power converter comprises a DC link capacitor, power electronics and an inventive EMC filter assembly as described above.

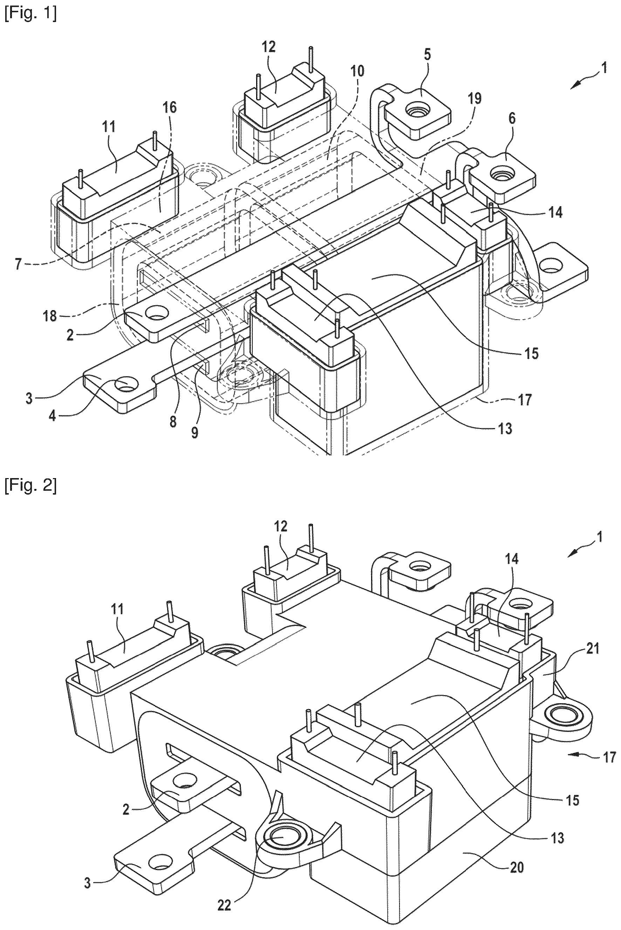

The invention is explained by means of preferred examples with reference to the drawings. The drawings are schematic and show: [Fig. 1] is XX.
[Fig. 1] is a first embodiment of an inventive EMC filter assembly in a perspective and partly sectional view.
[Fig. 2] is another view of the EMC filter assembly shown in Fig. 1.
[Fig. 3] is another embodiment of an inventive EMC filter assembly.
[Fig. 4] is another embodiment of an inventive EMC filter assembly.
[Fig. 5] is an example of equivalent circuit diagram for multiple embodiments of the EMC filter assembly.

Fig. 1 shows a first embodiment of an EMC filter assembly 1 comprising a first electrical connection, which is formed as a bus bar 2. The bus bar 2 has a rectangular cross-section and is configured to connect a first output terminal of a battery with a first electrical supply terminal of a power converter. The power converter can e.g. be an inverter. The EMC filter assembly 1 further comprises a second electrical connection, which is also formed as a bus bar 3 with a rectangular cross-section. End sections on both sides of the bus bars 2, 3 are provided with through holes 4, so that the bus bars 2, 3 can easily be connected with electric terminals. As shown in Fig. 1, the centre sections of both bus bars 2, 3 run parallel. On one side of the EMC filter assembly 1 end sections 5, 6 of the bus bars 2, 3 are bent to account for a specific installation environment.

The end sections 5, 6 of the bus bars 2, 3 are adapted to be connected to a printed circuit board (PCB) which is not depicted in Fig. 1. This allows for an electrical connection between the bus bars 2, 3 and other electrical components of the EMC filter assembly that will be presented below.

In the example of Fig. 1, the end sections 5, 6 of the bus bars 2, 3 comprise connecting portions that have the shape of a perforated plate extending parallel to the PCB. The connecting portions are then secured with screws to the PCB ensuring an electrical and mechanical connection.

The centre sections of the bus bars 2, 3 are surrounded by a first inductivity 7, which is formed as a nanocrystalline core. The first inductivity 7 has a cuboid shape and is provided with two rectangular through openings 8, 9 which are arranged parallel to each other. In addition, a second inductivity 10 with an identical shape, which is also formed as a nanocrystalline core, is disposed next to the first inductivity 7 along the longitudinal axis of the bus bars 2, 3. Both bus bars 2, 3 extend through the nanocrystalline core, which creates the EMC filter effect.

In addition, the EMC filter assembly 1 comprises several class Y capacitors (Cy capacitors), which are placed around the first and second inductivity 7, 10. Fig. 1 shows the lower side of the Cy capacitors with their terminals which extend upwards. In the installed state the class Y capacitors are arranged on a printed circuit board (PCB) which is not shown in Fig. 1 for better clarity. Cy capacitors 11, 12 are arranged parallel to the longitudinal axis of the bus bars 2, 3. On the opposite side of the bus bars 2, 3 further Cy capacitors 13, 14 are arranged transverse to the bus bars 2, 3. Between Cy capacitors 13, 14 a class X capacitor (Cx capacitor) 15 is arranged parallel to the longitudinal axis of the bus bars 2, 3. Each Cy capacitor 11, 12, 13, 14 is connected between one of the bus bars 2, 3 and ground. The Cx capacitor 15 is connected between the first bus bar 2 and the second bus bar 3. Each Cy capacitor 11, 12, 13, 14a and the Cx capacitor 15 are received in a receptacle 16, which is a box with one open side. The receptacles 16 are mounted in a housing 17, which surrounds the EMC filter assembly 1. Fig. 1 is a sectional view and exposes the interior. Both inductivities 7, 10 are received in receptacles 18, 19, which are depicted with dashed lines, so that their interior is visible. All capacitors, which are arranged on the printed circuit board, are pushed into the respective receptacles, when the PCB is mounted with the housing 17.

Fig. 2 is a similar view of the EMC filter assembly 1 shown in Fig. 1, apart from the fact that the complete housing 17 is depicted. It is visible that the housing 17 comprises one lower housing part 20 and one upper housing part 21, which are divided approximately halfway up. At the outer side of the housing 17 several lugs 22 are provided so that the EMC filter assembly can be mounted on a structure with screws or rivets. In the present embodiment the housing 17 is made from a plastics material.

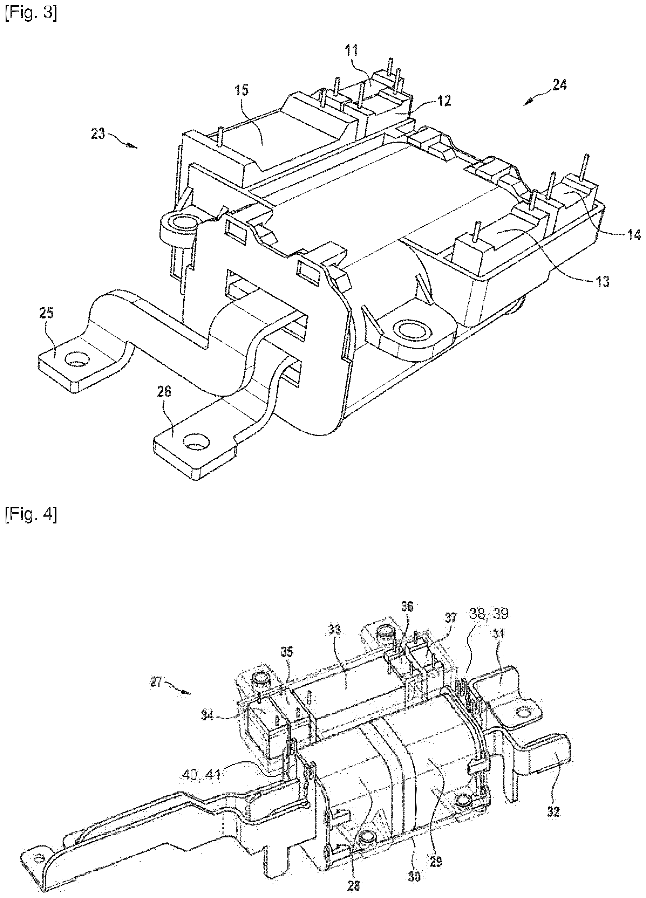

Fig. 3 shows another embodiment of an EMC filter assembly 23, which has a similar structure as the embodiment shown in Fig. 1 and 2. The EMC filter assembly 23 comprises a housing 24 through which bus bars 25, 26 extend. Within the housing 24 two nanocrystalline cores are arranged, which serve as first and second inductivity. Two first Cy capacitors 11, 12 are arranged besides the Cx capacitor 15. On the opposite side of the housing 24 two second Cy capacitors 13, 14 are arranged. The terminals of the Cx and Cy capacitors are exposed at the outside. In the installed state they penetrate a PCB, on which all electronic components are mounted. During manufacture of the EMC filter assembly 23 both inductivities and all Cx and Cy capacitors are preassembled and received in the housing 24. These electronic components are potted with resin in the housing 24, so that they are firmly attached, in order to avoid any problems due to vibration.

Fig. 4 shows another embodiment of an EMC filter assembly 27. A PCB, on which the electronic components are mounted, is not shown for better clarity. Two inductivities, which are formed as nanocrystalline cores 28, 29, are placed in a housing 30. In Fig. 4 the housing 30 is shown in a sectional view. Bus bars 31, 32 extend through the housing 30, which are connected to output terminals of the battery on one side and to supply terminals of a power converter on the other side. A Cx capacitor 33 is placed between first Cy capacitors 34, 35 on one side and second Cy capacitors 36, 37 on the other side. The EMC filter assembly 27 with all components as shown in Fig. 4 is preassembled. In this preassembled state it can be mounted on a power converter or on an inverter structure.

In this embodiment, the end sections 38, 39, 40, 41 of the bus bars 31, 32 are shaped as connection pins allowing an electrical connection between the bus bars 31, 32 and the PCB above.

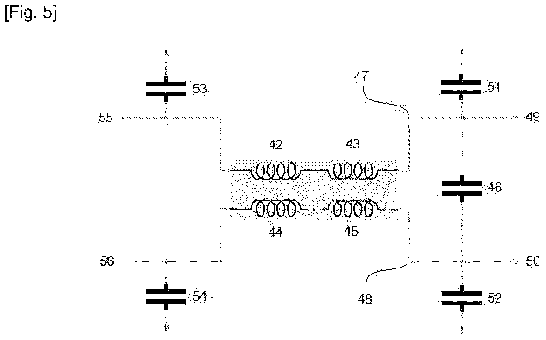

Fig. 5 shows an equivalent circuit diagram applicable to multiple embodiments of the EMC filter, such as the ones in Fig. 1 to 4. It mainly showcases the series connection between the two first inductivities 42, 43 and between the two second inductivities 44, 45 respectively.

A Cx capacitor 46 is connected to the first electrical connection 47, between the first inductivities 42, 43 and one of the output terminals 49 of a battery, and to the second electrical connection 48, between the second inductivities 44, 45 and the other one of the output terminals 50 of a battery.

A first Cy capacitor 51 is connected to the ground and to the first electrical connection 47, between the first inductivities 42, 43 and one of the output terminals 49 of a battery. A second Cy capacitor 52 is connected to the ground and to the second electrical connection 48, between the second inductivities 44, 45 and the other one of the output terminals 50 of a battery.

A third Cy capacitor 53 is connected to the ground and to the first electrical connection 47, between the first inductivities 42, 43 and one of the supply terminals 55 of a power converter. A fourth Cy capacitor 54 is connected to the ground and to the second electrical connection 48, between the second inductivities 44, 45 and the other one of the supply terminals 56 of a power converter.

## Claims

1. EMC filter assembly (1, 23, 27) for a power converter, comprising:
- a first electrical connection which is adapted to connect a first output terminal of a battery with a first electrical supply terminal of a power converter,
- at least one first inductivity (7), which is part of the first electrical connection,
- at least one first class Y capacitor (11, 12, 34, 35), connected between the first electrical connection and ground,
- a second electrical connection which is adapted to connect a second output terminal of a battery with a second electrical supply terminal of the power converter,
- at least one second inductivity (10), which is part of the second electrical connection,
- at least one second class Y capacitor (13, 14, 36, 37), connected between the second electrical connection and ground,
- at least one class X capacitor (15, 33), connected between the first electrical connection and the second electrical connection,
**characterized in that** the at least first inductivity (7), the at least one first class Y capacitor (11, 12, 34, 35), the at least second inductivity (10), the at least one second class Y capacitor (13, 14, 36, 37) and the at least one class X capacitor (15, 33) are received and preassembled in a housing (17, 24, 30).

2. EMC filter assembly according to claim 1, wherein the first and/or the second inductivity (7, 10) is/are formed as a magnetic core or a nanocrystalline core (28, 29) or a ferrite.

3. EMC filter assembly according to claim 1 or 2, wherein the at least first inductivity (7), the at least one first class Y capacitor (11, 12, 34, 35), the at least second inductivity (10), the at least one second class Y capacitor (13, 14, 36, 37) and the at least one class X capacitor (15, 33) are glued and/or potted with resin in the housing (17, 24, 30).

4. EMC filter assembly according to any of the preceding claims, wherein the first electrical connection and/or the second electrical connection extend through an opening of a magnetic core, preferably a nanocrystalline core (28, 29).

5. EMC filter assembly according to any of the preceding claims, wherein the first electrical connection and/or the second electrical connection are formed as bus bars (2, 3, 25, 26, 31, 32), preferably with a rectangular cross-section.

6. EMC filter assembly according to any of the preceding claims, wherein the housing (17, 24, 30) is made from an electrically insulating material, preferably a plastic material.

7. EMC filter assembly according to any of the preceding claims, wherein the housing (17, 24, 30) comprises at least one through hole and/or at least one lug (22) with a through hole for fastening the housing (17, 24, 30).

8. EMC filter assembly according to any of the preceding claims, wherein the first electrical connection comprises at least two first inductivities (7) and/or the second electrical connection comprises at least two second inductivities (10), wherein the two first or second inductivities (7, 10) are each connected in series.

9. EMC filter assembly according to any of the preceding claims, wherein the at least one first inductivity (7), the at least one first class Y capacitor (11, 12, 34, 35), the at least one second inductivity (10), the at least one second class Y capacitor (13, 14, 36, 37) and the at least one class X capacitor (15, 33) are arranged on a printed circuit board (PCB).

10. EMC filter assembly according to the preceding claim, wherein the at least one first class Y capacitor (11, 12, 34, 35), the at least one second class Y capacitor (13, 14, 36, 37) and the at least one class X capacitor (15, 33) are connected electrically to the first and the second electrical connections respectively through the printed circuit board (PCB).

11. EMC filter assembly according to any of the claims 1 to 8, wherein the at least one first inductivity (7), the at least one first class Y capacitor (11, 12, 34, 35), the at least one second inductivity (10), the at least one second class Y capacitor (13, 14, 36, 37) and the at least one class X capacitor (15, 33) are arranged on a lead frame.

12. Power converter, in particular inverter, for an electric motor, comprising a DC link capacitor, power electronics and an EMC filter assembly (1, 23, 27) according to any one of claims 1 to 11.
